# EUROPEAN PATENT APPLICATION

(11) **EP 2 076 084 A1**
(43) Date of publication of application: **01.07.2009**
(21) Application number: 07017668.0
(22) Date of filing: 10.09.2007
(51) Int. Cl.: H04W 72/04

(54) **Method and user equipment unit for wireless data transmission**

(71) Applicant: Nokia Corporation, 02150 Espoo (FI)
(72) Inventor: The designation of the inventor has not yet been filed
(74) Representative: Tognetty, Virpi Maria

(57) **Abstract**

The invention relates to a Method for wireless data transmission from multiple user equipment units to a base station in a mobile radio network system, wherein a dedicated channel is provided for uplink data transmission for at least one of the multiple user equipment units, wherein the data transmitted in the enhanced dedicated channels are transmitted using a cyclic data structure.

In order to improve the flexibility of the system, it is proposed that the method comprises transmitting a resource allocation signal to the at least two user equipment units, wherein the resource allocation signal contains information for allocating resources of the cyclic data structure for the respective enhanced dedicated channel.

## Description

### 1. Technical Field of the Invention

The invention relates to a method for high speed uplink packet access for wireless data transmission according to the preamble of claim 1, to a user equipment unit according to claim 18 and to a base station for using a mobile radio network system according to the preamble of claim 20.

### 2. Technical Field of the Invention

The invention relates to a method and devices for high speed uplink packet access (HSUPA). In HSUPA, user equipment units may be provided with an enhanced dedicated channel (E-DCH) for transmitting data from the user equipment unit to a base station in a mobile radio network system. The enhanced dedicated channel and its properties are described e.g. in the 3GPP specification TS 25.319 version 7.2.0 release 7. The latter specification is included herewith by reference as far as it concerns the details of the signalling relating to the enhanced dedicated channel (E-DCH). The enhanced dedicated channel may be characterized in that there is only one coded composite transport channel (CCTrCH) of the E-DCH type per user equipment unit (UE) and/or there is only one E-DCH per CCTrCH of E-DCH type. Moreover, the E-DCH transport channel typically has only one transport block per transmission time interval (TTI). If the E-DCH is of frequency division duplex (FDD) type, both 2 ms TTI and 10 ms TTI may be supported. A 5 ms TTI may be supported by a 1.28 Mcps TDD E-DCH and a 10 ms TTI may be supported by 3.84 Mcps and 7.68 Mcps TTD E-DCH.

The support of different TTI values may be mandatory for user equipment units in certain categories and switching between different TTIs can be performed by the UTRAN using L3 signalling.

The scheduling of the enhanced dedicated channel may be controlled by the base station, which may be a NodeB using control signals using control signalling in uplink and downlink. In addition, guaranteed bit rate (GBR) services are supported through non-scheduled transmission (NST). For scheduled transmissions, the radio network system controls the maximum allowed power ratio between the E-DCH dedicated physical data channel (E-DPDCH) and the dedicated physical control channel (DPCCH). In the case of non-scheduled transmissions, the network controls the maximum number of bits that can be included in a medium access control type e protocol data unit (MAC-e PDU).

Non-scheduled transmissions are defined per MAC-d flow. For non-scheduled transmissions, a maximum number of bits that can be included in a MAC-e PDU (called non-scheduled grant) are defined by the serving radio network controller (SRNC) Logical channels mapped on a non-scheduled MAC-d flow can only transmit up to a non-scheduled grant configured for that MAC-d flow. The non-scheduled transmission is configured by the SRNC, the user equipment unit UE is allowed to send E-DCH data at any time for MAC-d flows that are configured for non-scheduled transmissions. In the non-scheduled transmission, the user equipment may transmit up to a configured number of bits with about receiving any scheduling command from the base station. Thus, signalling overhead and scheduling delay may be minimized.

For scheduled E-DCH transmission, the base station or NodeB controls the uplink resources by sending scheduled grants to the user equipment units once per TTI or slower. The user equipment units (UE) can request more resources by sending a scheduling request to the NodeB. Such a request by the UE may have the form of scheduling information and happy bit, wherein the happy bit is a dedicated bit indicating whether the grant bit rate is considered sufficient by the UE or not. The scheduling information is transmitted as a part of the MAC-e header for the logical channels for which radio resource control (RRC) is configured such that reporting needs to be made. It provides the serving base station with a better view of the amount of system resources needed by the user equipment unit UE and the amount of resources it can actually dispose of. The scheduling grants control a maximum allowed E-DPDCH/DPCCH power ratio which is also called serving grant (SG). The serving grant refers to the power ratio used in the E-DCH transport format combination (TFC) selection for the hybrid automatic retransmission request (HARQ) processes, which have not been restricted from transmitting scheduled transmissions.

There are two types of scheduling grants. Absolute grants (AG) can be sent by the serving E-DCH cell to provide an absolute imitation of the maximum amount of uplink resources the user equipment unit may use. For a 2 ms TTI, the absolute grant can activate/deactivate one or all HARQ processes which are not disabled as per L3 signalling. The treatment of the HARQ processes is coded in a value called the absolute grant scope. Absolute grants may be valid for one user equipment, for a group of user equipments or for all user equipments. Up to two identities (E-RNTIs), one primary and one secondary, using the same E-DCH channel can be allocated to a user equipment unit at a time and the UE needs to listen to both identities all the time. Primary absolute grants always affect the serving grant (SG), wherein secondary absolute grants only affect the SG, if the user equipment unit has been switched to its secondary E-RNTI. When the UE is switched to its secondary E-RNTI, the user equipment should update the serving grant to the latest received secondary absolute grant, if not the latest absolute grant that affected the SG was the secondary one.

The second type of scheduling grants is relative grants (RG). RGs can be sent by the serving and non-serving NodeBs. The relative grants received from the serving base station can increase or decrease the resource limitation compared to the previously used value on the same HARQ process or keep it unchanged. The relative grant allows the base station scheduler to incrementally adjust the serving grant of the user equipments under its control. Relative grants from the non-serving base stations can only decrease the resource limitation compared to the previously used value, if the maximum allocated uplink rate of transfer in the cell is exceeded. This allows neighbouring NodeBs to adjust the transmitted rate of user equipment units that are not under their control in order to avoid overload situations in a neighbouring cell. As absolute grants, relative grants may be valid for one user equipment unit, for a group of user equipment units or for all user equipment units.

Recently, it has been proposed to use a cyclic transmission format for maximizing throughput of packet data in WCDMA uplink. The idea is to schedule orthogonal resources to high bit rate users while unscheduled users may utilize non-orthogonal resources and non-cyclic data formats. The resources of the high bit rate users may be orthogonal in time and/or in frequency domain, while low bit rate users are spread over the whole transmission bandwidth. This would assume semi-static (RNC controlled) transmission format and/or allow only semi-static control for the maximum data rate for the low data rate users.

### 3. Summary of the Invention

One object of the invention is to provide a method for high speed uplink packet access with an enhanced flexibility.

A first aspect of the invention relates to a method for high speed uplink packet access for wireless data transmission from multiple user equipment units to a base station in a mobile radio network system. An enhanced dedicated channel is provided for uplink data transmission for at least one user equipment unit is provided, wherein the data transmitted in the enhanced dedicated channels are transmitted using a cyclic data structure.

It is proposed to provide the method with a step of transmitting a resource allocation signal to the at least one user equipment unit, wherein the resource allocation signal contains information for allocating resources of the cyclic data structure for the respective enhanced dedicated channel. By enabling a low level signalling determining the resource allocation, the method becomes very flexible and dynamic.

Although the resource allocation messages are generated in the same way if there is only one user equipment unit camped at the cell covered by the base station, the merits of the improved resource allocation procedure are particularly apparent if the resources are allocated to multiple user equipment units. In particular, the benefits for the system capacity are then achieved when more than UE is transmitting, but the same method may also be applied for the case of a single UE. In particular, each UE may be provided with a separate and independent resource allocation message.

Moreover, it is proposed that the method further comprises a step of transmitting a grant message comprising the maximum allowed bit-rate of the enhanced dedicated channels, wherein the resource allocation signal is contained in said grant message. By using the grant message, no additional messages have to be generated and backward compatibility may be easily achieved.

In particular, the grant message may contain a code, wherein the value of the maximum allowed bit rate or the value of a grant scope is a first function of the code and wherein the resources allocated for the enhanced dedicated channel are determined based on the same code. The interpretation of the code may differ depending on the capabilities of the user equipment unit.

Confusions may be avoided if the resources are allocated by a Radio Resource Control (RRC) of the mobile radio network system.

The merits of the invention are particularly important if the cyclic data structure is a code division multiple access structure, wherein the resources to be allocated are codes. The resources to be allocated may also include a code spreading factor.

Alternatively, the cyclic data structure may be a frequency division multiple access structure, wherein the resources to be allocated are sub-frequencies of the allocated transmission frequency.

Not only the resources but also the format type may be flexibly adapted if the resource allocation signal comprises information indicating the cyclic transmission format to be used.

Moreover, it is proposed that the resources of the cyclic data structure are organized in multiple virtual resource blocks, wherein the resource allocation signal contains an identifier for one or more virtual resource blocks. Since the organisation in blocks allows for a very easy identification of the resources, the signalling load relating to the resource allocation may be reduced.

A further reduction of the signalling may be achieved if the resources of the cyclic data structure are identified using a predetermined continuous numbering, wherein the resource allocation signal contains a starting number and a length a block of resources allocated to the respective user equipment unit.

A further aspect of the invention relates to a user equipment unit (UE) for use in a radio communication network according to the invention. In order to enable a flexible resource allocation, it is proposed to provide the user equipment unit with means for implementing a method for high speed uplink packet access for wireless data transmission of the above described type.

In particular, the user equipment unit (UE) may be configured to switch the transmission format (WCDMA, SCCP) from at least a first transmission format (WCDMA, SCCP) to a second transmission format (WCDMA, SCCP) depending at least on a parameter relating to a bit-rate of the dedicated channel (E-DCH). The user equipment may e.g. comprise different coding units for the different data formats.

The merits of the invention become particularly apparent, if the first transmission format is a wide band code division multiple access (WCDMA) transmission format and wherein the second transmission format is a single carrier transmission format with a cyclic prefix (SCCP). Since WCDMA transmission formats generate interference to each other, if many user equipment units camped at the same base station transmit with high power, switching to an SCCP transmission format may lead to an important gain in the signal to noise ratio as the SCCP transmission formats do not generate interference to each other. If the single carrier cyclic prefix transmission format is used, a dedicated physical control channel (E-DPCCH) relating to the enhanced dedicated channel and a dedicated physical data channel (E-DPDCH) relating to the same enhanced dedicated channel may be code multiplexed to use a simultaneously transmitted WCMDA transmission format, or time or frequency multiplexed within the SCCP transmission format.

In order to avoid problems with pending HARQ retransmissions, when there is a change in transmission format, it is further proposed that the switching of the transmission format is signalled a predefined period before the switching of the transmission format is applied. The predefined period may be determined such that pending HARQ retransmissions are most probably completed before the transmission format or the allocated resources are changed.

Further characterizing features and the advantages thereof will become apparent to the skilled person from the following detailed description of embodiments of the invention. The following description refers to figures illustrating specific embodiments of the invention combining multiple characterizing features in a particular way. A skilled person will see that the general idea of the invention is not limited to the specific combination of the described embodiments of the invention and will be able to find further combinations of the characterizing features being adapted to specific application scenarios without departing from the scope of the invention as defined in the attached claims.

### 4. Brief Description of the Drawings

Fig. 1 schematically shows a first embodiment of the invention, wherein the transmission resources are determined by the base station.
Fig. 2 shows a flow diagram of a method for determining the transmission resources according to the first embodiment of the invention.

### 5. Detailed Description of an Embodiment of the Invention

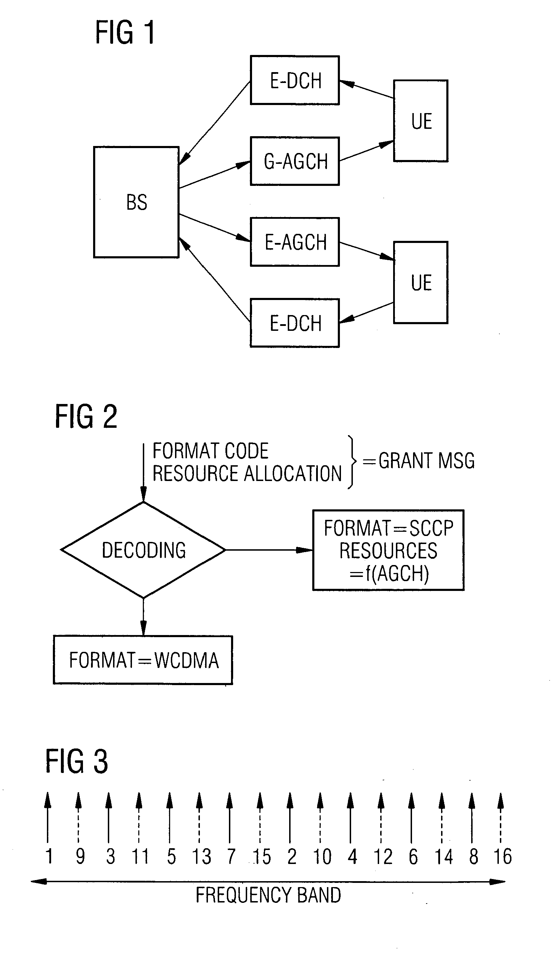

Fig. 1 illustrates a method for high speed uplink packet access for wireless data transmission from multiple user equipment units (UE) to a base station (BS) in a mobile radio network system, e. g. in a 3^{rd} Generation or beyond 3^{rd} Generation mobile radio network system, such as UTRAN LTE and Wi-Max FDMA, wherein the base station (BS) is a NodeB. The mobile radio network system is capable of providing the user equipment units (UE) with an enhanced dedicated channel (E-DCH) with a granted bit rate to be used for uplink data transmission from the user equipment unit (UE) to the base station (BS).

The base station (BS) submits a grant message 10 to the user equipment unit (UE), wherein the grant message is transmitted using an absolute grant channel ((E-AGCH) or relative grant channel (E-RGCH) and includes a code representing the granted bit rate of the enhanced dedicated channel and a code representing the grant type, wherein the different grant types may differ, e. g. in the way how hybrid automatic retransmission requests (HARQ) are treated.

The base station BS, which is the base station of the NodeB type, selects the transmission format for the wireless data transmission in the enhanced dedicated channel and the transmission resources to be used out of at least two possible transmission formats and out of a predetermined set of available resources. The transmission formats may include, e. g. a standard wide band code division multiple access (WCDMA) format and a single carrier cyclic prefix (SCCP) format. The details of the data formats and the methods for code generation are described, e. g. in the document WO 2007/091157 A2, which is included herewith by reference as far as the apparatuses, methods and computer programs capable of generating the data formats are concerned.

The base station (BS) is provided with a-priori information of the capabilities of the equipment unit (UE), in particular, which transmission formats are supported by the user equipment unit. If the user equipment unit is capable of supporting more than one transmission format, the base station BS transmits a code representing the transmission format and the resources to be selected using the grant channel 10.

Moreover, if e. g. a bit rate transmitted in the enhanced dedicated channel exceeds a predetermined threshold value, or if e. g. a number of simultaneously transmitting user equipment units received by the base station increases, the base station may switch the transmission format by selecting an appropriate code in the transmitted grant message 10. Since the switching process is triggered by the grant message 10, the switching of the transmission format is controlled by the base station (BS). The grant message 10 may be an absolute or relative grant message and the user equipment unit (UE) may switch the transmission format depending on the signalled granted bit rate, e. g. using a predefined mapping or decoding.

Accordingly, the base station (BS) transmits a resource allocation signal to the user equipment units being provided with an enhanced dedicated channel (E-DCH). To do so, it makes use of the E-DCH absolute grant channel (E-AGCH), wherein some values of the grant code encode information for allocating resources of the cyclic data structure for the respective enhanced dedicated channel. For example, the higher values of the absolute grant code might correspond to predetermined combinations of resources. In other words, the value of the maximum allowed bit rate or the value of a grant scope is a first function of the code and wherein the resources allocated for the enhanced dedicated channel are determined based on the same code.

In a first embodiment of the invention, the cyclic data structure is a code division multiple access structure and the resources to be allocated by the radio resource control are codes and include a code spreading factor (SF).

In a second embodiment of the invention, cyclic data structure is a frequency division multiple access structure and the resources to be allocated by the radio resource control are the number of sub-frequencies and the logical number of the starting frequency.

In order to allocate the resources to different users, an Interleaved Frequency Division Multiple Access scheme or a Block - Interleaved Frequency Division Multiple Access could be applied. This could e.g. be done by numbering the frequency pins in an interleaved manner as shown in Fig. 3. If e.g. one user would be scheduled a starting frequency number 1 with the number of frequency pins allocated to it and the other starting frequency number 9 with the number of frequency pins allocated to it. In this example a total of 16 frequency pins is available in the frequency band illustrated in Fig. 3, one user would get the frequencies indicated with solid arrows and the other user would get all frequencies indicated with dashed arrows.

The size of the resource allocation signal can be kept minimum if the resources of the cyclic data structure are organized in multiple virtual resource blocks. The resource allocation signal may then contain an identifier for one or more virtual resource blocks.

In order to simplify the identification of the resources, the resources of the cyclic data structure are identified using a predetermined continuous numbering. The resource allocation signal contains a starting number and a length a block of resources allocated to the respective user equipment unit.

Besides providing the resource allocation for a given transmission format, the resource allocation signal comprises information indicating the cyclic transmission format to be used.

Fig. 2 schematically shows a method for selecting the transmission format to be used. The method illustrated in Fig. 3 is implemented in the user equipment unit (UE). The user equipment unit receives the grant message comprising the code representing the format. The code is decoded and either the SCCP or the WCDMA format is selected.

According to the above described embodiment, the transmission format is controlled by the base station (BS) (the NodeB), thus the BS knows beforehand the transmission format. The user equipment unit (UE) applies the signalled format for all transport format combinations of the enhanced dedicated channel (E-TFC) and data rates and modulations. The NodeB scheduling signals a grant which implicitly or explicitly indicates that the user equipment unit (UE) has to select the cyclic transmission format SCCP or the WCDMA transmission format whenever is has any data to send.

If the cyclic transmission format SCCP is applied, the enhanced dedicated physical control channel (E-DPCCH) (the control channel referring to the enhanced dedicated channel), the enhanced dedicated physical data channel (E-DPDCH) and also the dedicated physical control channel (DPCCH) and the high speed dedicated physical control channel (HS-DPCCH) are time-multiplexed and thus can be transmitted using the cyclic format SCCP. However, alternatively the channels or part of the channels could be transmitted code-multiplexed as 3GPP release 7 WCDMA.

The same transmission format used for transmitting the E-DPDCH is applied for hybrid automatic retransmission request (HARQ) retransmission. When a transmission format change is signalled, the predefined guard period is started and actual switching procedure is performed at the end of the predefined period. This enables a cool-off period allowing a completion of the pending HARQ retransmissions before the transmission format is changed. Alternatively or in the case where some HARQ retransmissions are still pending at the end of the predefined period, the HARQ buffers are flushed when the transmission format is changed.

If a user equipment unit (UE) does not support the cyclic transmission format, the user equipment unit (UE) would be transmitting using the WCDMA data format while other users supporting cyclic transmission format would use the signalled transmission format as indicated in the grant message 10.

The invention allows for a flexible assignment of resources to the high speed uplink packet access channels of simultaneously transmitting user equipment units UE. As a consequence, the network is very flexible with regard to resource allocation.

## Claims

1. Method for wireless data transmission from multiple user equipment units to a base station in a mobile radio network system, wherein a dedicated channel is provided for uplink data transmission for at least one user equipment unit, wherein the data transmitted in the dedicated channels is transmitted using a cyclic data structure,
**characterized in that**
the method comprises transmitting a resource allocation signal to the at least one user equipment unit, wherein the resource allocation signal contains information for allocating resources of the cyclic data structure for the respective dedicated channel.

2. Method according to claim 1, **characterized in that** the method further comprises a step of transmitting a grant message comprising the maximum allowed bit-rate of the dedicated channel, wherein the resource allocation signal is contained in said grant message.

3. Method according to claim 2, **characterized in that** said grant message comprises a code, wherein the value of the maximum allowed bit rate or the value of a grant scope is a first function of the code and wherein the resources allocated for the enhanced dedicated channel are determined based on the same code.

4. Method according to one of the preceding claims, **characterized in that** the resources are allocated by a base station of the mobile radio network system.

5. Method according to one of the preceding claims, **characterized in that** the cyclic data structure is a code division multiple access structure, wherein the resources to be allocated are codes.

6. Method according to one of claims 1 - 4, **characterized in that** the cyclic data structure is a frequency division multiple access structure, wherein the resources to be allocated are frequency pins.

7. Method according to one of the preceding claims, **characterized in that** the resources to be allocated include a code spreading factor.

8. Method according to one of the preceding claims, **characterized in that** the resource allocation signal comprises information indicating the cyclic transmission format to be used.

9. Method according to one of the preceding claims, **characterized in that** the resources of the cyclic data structure are organized in multiple virtual resource blocks, wherein the resource allocation signal contains an identifier for one or more virtual resource blocks.

10. Method according to one of the preceding claims, **characterized in that** the resources of the cyclic data structure are identified using a predetermined continuous numbering, wherein the resource allocation signal contains a starting number and a length a block of resources allocated to the respective user equipment unit.

11. User equipment unit (UE) **characterized by** comprising means for implementing a method for high speed uplink packet access for wireless data transmission according to one of the preceding claims.

12. User equipment unit (UE) according to claim 11, **characterized in that** the user equipment unit (UE) is configured to switch the transmission format (WCDMA, SCCP) from at least a first transmission format (WCDMA, SCCP) to a second transmission format (WCDMA, SCCP) depending at least on a parameter relating to a bit-rate of the dedicated channel (E-DCH).

13. Base station for use in a mobile radio network, **characterized by** comprising means for implementing the method according to at least one of claims 1 - 10.
